Europäisches Patentamt

European Patent Office

Office européen des brevets

(19)

(11) Publication number: **0 219 493**
**B1**

# EUROPEAN PATENT SPECIFICATION

(12)

(45) Date of publication of patent specification: **28.09.88**

(51) Int. Cl.⁴: **C 01 D 1/42**

(21) Application number: **85902027.3**

(22) Date of filing: **18.04.85**

(86) International application number:
**PCT/EP85/00175**

(87) International publication number:
**WO 86/00876 13.02.86 Gazette 86/04**

(54) **METHOD AND APPARATUS FOR PREPARING HIGH-CONCENTRATION ALKALI.**

(43) Date of publication of application:
**29.04.87 Bulletin 87/18**

(45) Publication of the grant of the patent:
**28.09.88 Bulletin 88/39**

(84) Designated Contracting States:
**AT BE CH DE FR GB IT LI LU NL SE**

(56) References cited:
**EP-A-0 029 656**

(73) Proprietor: **Sulzer - Escher Wyss AG**
**Hardstrasse 319**
**CH-8023 Zürich (CH)**

(73) Proprietor: **UBE INDUSTRIES, LTD.**
**12-32, Nishihonmachi 1-chome**
**Ube-shi, Yamaguchi-ken 755 (JP)**

(72) Inventor: **WINKLER, Robert**
**Schwarzackerstrasse 4**
**CH-8304 Wallisellen (CH)**
Inventor: **SALA, Siro**
**Via Gardano 3h**
**I-22100 Como (IT)**
Inventor: **KOBAYASHI, Takayuki 1980**
**Okinoyama Koguchi**
**Ube City**
**Yamaguchi Prefecture 755 (JP)**
Inventor: **YOKOTA, Shinjiro 1980 Okinoyama**
**Koguchi**
**Ube City**
**Yamaguchi Prefecture 755 (JP)**

(74) Representative: **Paschedag, Hansjoachim**
**c/o Sulzer - Escher Wyss AG Patentabteilung**
**Postfach**
**CH-8023 Zürich (CH)**

Courier Press, Leamington Spa, England.

## Description

Background of the Invention:

The present invention relates to a method and an apparatus for preparing high-density or concentration alkali such as caustic soda (NaOH) and caustic potash (KOH) by evaporation at an elevated temperature. Therein the term "high-density" shall mean a concentration greater than about 98% NaOH or 94% KOH, resp.

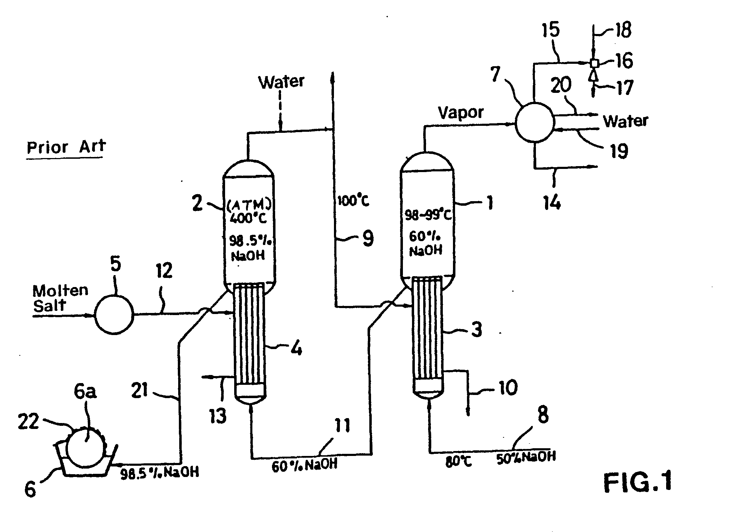

A typical prior art apparatus used to prepare high-density caustic soda is shown in Fig. 1.

In this figure, reference numerals 1 and 2 denote evaporators, 3, 4 denote heat exchangers constituted by a multiplicity of tubes connected to the lower side of the evaporators, 5 denotes a heat medium heater, 6 denotes a flaker, and 7 denotes a condenser.

In this apparatus, a caustic soda solution of 50% density and maintained at 80°C is supplied into the evaporator 1 from a pipe 8 through the tube of the heat exchanger provided under the evaporator 1. The caustic soda solution is heated to 98 to 99°C within the heat exchanger 3, by a 100°C heat source which is formed by a vapor introduced through a pipe from the upper end of the evaporator 2 into the heat exchanger 3. Heating reduces the water content so that the caustic soda solution is concentrated to a density of about 60%.

Reference numeral 10 denotes a discharge pipe through which the condensate is discharged after it has been used.

The 60% caustic soda solution accumulated on the bottom of the evaporator 1 is transferred into the evaporator 2, through a pipe 11 leading from the bottom of the evaporator 1 and then through the tube of the heat exchanger 4 provided under the evaporator 2. During the transfer, the caustic soda solution is heated by molten salt which is supplied from the heat medium heater 5 through a pipe 12 while it passes through the heat exchanger 4, in order to become a 98,5% caustic soda solution at 400°C. Numeral 13 denote a pipe through which the molten salt is discharged.

The vapor derived from the upper end of the evaporator 1 is cooled by the condenser 7, and the condensate is taken out through the pipe 14. The inert gas which is not condensable is extracted through a pipe 15 and then through a pipe 17 by the action of a vapor ejector 16. A numeral 18 denotes a pipe for supplying steam, while numerals 19 and 20 denote pipes for supplying and discharging water.

The caustic soda solution of 98.5% density collected on the bottom of the evaporator 2 is introduced into the flaker 6 through a pipe 21 leading from a lower portion of the evaporator 2. The flaker 6 has a rotary drum 6a in which water is supplied to the inside so as to cool the solution to flakes 22 of high-density caustic soda.

In this conventional arrangement, since the flaker 6 is at atmospheric pressure, it is difficult to maintain pressure in the evaporator 2. Therefore, the internal pressure in the evaporator 2 has to be maintained at atmospheric pressure. However, if a high pressure would be tried to be maintained inside the evaporator 2, it would have been necessary to provide a suitable pressure-reducing means in the circuit of pipe 21, to prevent the internal pressure from being relieved into the flaker 6. Such a pressure-reducing means might be constituted by a valve, orifice or a restriction. Unfortunately, however, no material was available which could long withstand the effect of restricting the flow of high density caustic soda at high temperature. The best material now available is pure nickel, but even this quickly corrodes and is eroded and soon becomes unusable when exposed to a suddenly expanding mixture of vapor and high density caustic soda at high temperature. Therefore, the internal pressure of the evaporator 2 directly connected to the flaker 6 through the pipe 21 is usually maintained at atmospheric pressure, in prior art.

To attain a 99% caustic soda solution in the evaporator 2, molten salt, as the heat source, is supplied to the heat exchanger 4 so as to heat the interior of the evaporator to 400°C. In consequence, the 400°C vapor is introduced into the pipe 9. Because of the high energy of this vapor; therefore, if all of this vapor is directly supplied to the heat exchanger 3, this heat source would concentrate the 50% density caustic soda solution of 80°C supplied from the pipe 8 into the tube of the heat exchanger 3 up to 65%, provided adequate vapor pressure is achieved. In this conventional arrangement, however, the vapor can be used only as heat source at a relatively low saturation temperature of 100°C, so that the evaporator 1 can achieve a caustic soda solution of about 60% only. If all the vapor from the evaporator 2 is introduced into the heat exchanger 3, the internal pressure in the evaporator 2 will rise and the pressure will be undesirably expand to the flaker 6.

For these reasons, in the conventional apparatus shown in fig. 1, the vapor introduced from the evaporator 2 into the tube 9 is not all introduced into the heat exchanger, but some of it is discharged into the atmosphere from an intermediate region of the pipe 9, thereby wasting energy.

Summary of the Invention:

An object of the invention is to provide a method and an apparatus to prepare high-density alkali, which will obviate the above-described problems of the prior art.

A special object of the invention is to provide a method and an apparatus by which the alkali may be concentrated more economically under high pressure without sudden expansion of the concentrated solution to atmospheric pressure by pressure reducing devices subject to corrosion.

To this end, according to the invention, the alkali solution is concentrated by evaporation under high pressure and elevated temperature and the concentrated solution is expanded to a low pressure by expansion through a pressure difference absorbing means absorbing gradually the pressure difference between the high pressure at the evaporation and the low pressure after expansion.

With this arrangement, no surplus vapor is wasted; hence, energy is used very efficiently. Since the expansion between high and low pressure regions takes place gradually over a considerable length avoiding any sudden expansion at limited points by valves etc., the attack of the materials by corrosion is considerably reduced and materials may be used which are much less subject to corrosion.

Especially, it is advantageous, in order to prevent pressure venting from the pressurized evaporator into the atmospheric pressure region, e.g. a flaker, to dispose as a pressure difference absorbing means a U-shaped seal siphon tube and a low-pressure vessel at less than atmospheric pressure between the evaporator and the flaker. With this arrangement, the pressure difference between the high-pressure vessel constituted by the pressurized evaporator and the low-pressure vessel, is maintained by the U-shaped seal siphon device, automatically.

According to a further, very advantageous improvement of the invention an intermediate seal pot is disposed between the high-pressure evaporator and the low-pressure vessel connected with the low-pressure vessel by an additional recirculation pipe by which a part of the expanded cool solution is recirculated and mixed with the solution in the intermediate seal pot.

Brief Description of the Drawings:

The invention will become clear from the following description of the preferred embodiment in conjunction with the accompanying drawings.

Fig. 1 is an illustration of a prior art apparatus, for preparing high-concentration alkali;

Fig. 2 is an illustration of a first embodiment of the invention; and

Fig. 3 is a vertical sectional view of a part of another embodiment of the invention.

Description of Preferred Embodiments:

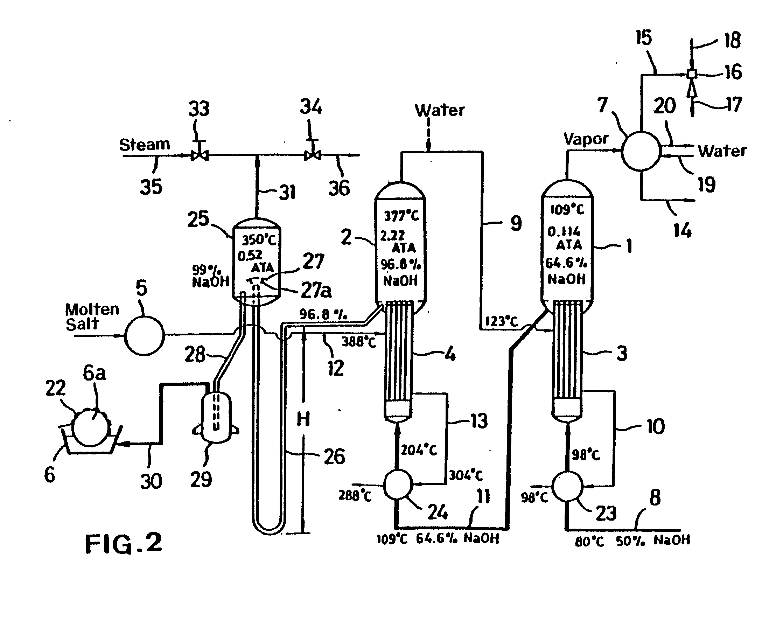

Fig. 2 shows a first embodiment of the invention. In this figure, the same reference numerals denote the same parts or members as those appearing in Fig. 1. Especially, the evaporators 1, 2 are substantially the same as those in Fig. 1. The embodiment of Fig. 2, however, differs from the conventional apparatus shown in Fig. 1 in several ways.

Firstly, a positive internal pressure of 1.61 to 2.22 atmospheres (bar) is maintained within the evaporator 2, and a saturation heat source of 110 to 123°C is produced by adding water to the 372 to 377°C superheated vapor generated in the evaporator 2, and the whole part of this heat source is supplied to the heat exchanger 3. Also, preheaters 23 and 24 are provided in the pipes 8 and 11, such that the caustic soda solution flowing in the pipes 8 and 11 is preheated by the heat source taken out from the heat exchangers 3 and 4 through the pipes 10 and 13. Note also that the pressure in the evaporator 1 is reduced to a level of 0.114 bar (ATA), so as to obtain a 64.6% caustic soda solution at 109°C. In this state, a 96.8% caustic soda solution is obtained in the evaporator 2.

With this arrangement, with a 123°C heat source used in the heat exchanger 3, and at pressure in the evaporator 1 of 0.114 bar, it is possible to remove the water up to a density of the caustic soda in the evaporator 1 to 64.4% at a temperature of the caustic soda in the evaporator 1 of 109°C. Consequently, a caustic soda solution of higher density and temperature than the conventional arrangement can be introduced into the tube of the heat exchanger 4 associated with the evaporator 2. The amount of heat source to be supplied to the heat exchanger 4 can be reduced by an amount corresponding to the reduction of the amount of water to be removed in this heat exchanger, so that the respective energy is saved. In an evaporator with internal pressure raised to 1.61 to 2.22 bar, it is possible to obtain a 96.8% caustic soda solution.

Since the interior of the evaporator 2 is pressurized, a means is to be provided to reduce the pressure between the evaporator 2 and the cooled flaker 6.

To this end, in this invention, a low-pressure vessel 25 at a pressure less than atmospheric pressure, about 0.52 bar, is connected to the evaporator 2, such that an expansion flash takes place between the high-pressure vessel, the evaporator 2, and the low-pressure vessel 25. At the same time, the lower end region of the evaporator 2, the high-pressure vessel, and the low-pressure vessel are connected through a hairpin shaped siphon tube 26, to maintain a seal head H large enough to compensate for the pressure difference between the evaporator 2 and the low-pressure vessel 25. The height of this seal is about 10 m. It is possible to regulate automatically, by the virture of the U-shaped seal siphon tube 26, the pressure difference of expansion, i.e., between the high-pressure vessel 2 and the low-pressure vessel 25, even when the internal pressure of the evaporator 2 changes. Since no abrupt relieve but only a smooth continuous relieve takes place in this seal siphon tube 26, corrosion and erosion which are inevitable in the conventional devices is considerably suppressed.

One end of the seal siphon tube 26 projects slightly into the evaporator 2, to permit an overflow of the caustic soda solution accumulated on the bottom of the evaporator 2. The other end of the seal siphon tube 26 projects largely into the low-pressure vessel 25 vertically upward. A deflector 27 is supported by a plurality of supports 27a above the other end of the seal siphon tube 26, such that the caustic soda solution coming out of the seal siphon tube collides with the deflector 27 and is discharged into the low-pressure vessel 25.

The caustic soda solution in the evaporator 2, at a pressure higher than atmospheric pressure and heated and concentrated to 96.8% or higher at 370°C, is subjected to an adiabatic flash into the low-pressure vessel 25 through the U-shaped seal siphon tube 26, so that the latent heat contained in the caustic soda solution itself is utilized as the heat source for the concentration by flash evaporation, thus achieving a concentration of the caustic soda solution up to 99%.

The high density caustic soda solution, which has overflown the end of tube 28 projecting slightly from the bottom wall of the low-pressure vessel 25 comes into a seal tank 29 and is sent to the flaker 6 through a pipe 30, thus becoming a flake-like product.

With this arrangement, it is not necessary to pay specific attention to the reduction of the pressure difference between the high-pressure vessel 2 and the low-pressure vessel 25, due to a reduction in the load, because the difference between the levels of the liquid in both tubes of the Y-shaped seal siphon tube 26 is automatically reduced after the pressure difference has been reduced.

The liquid in the U-shaped seal siphon tube 26, is agitated if the load fluctuation is too great. This problem may be solved by a baffle in the seal siphon tube 26 to stabilize the liquid surface. Such a baffle, however, will soon become unusable due to rapid corrosion and erosion. In this embodiment, therefore, the seal siphon tube 26 is constituted by a tall U-shaped pipe with a height of about 10 m.

The pressure in the low-pressure chamber 25 should never be reduced below about 0.3 bar, thereby solidifying the caustic soda solution. To obviate this problem, according to the invention, on the vapor discharging pipes 35, 36 extending from the discharging pipe 31 connected to the upper end of the low-pressure vessel 25, regulating valves 33 and 34 are provided, which can regulate the flow of make-up steam or regulate the discharge flow rate of vapor. If the internal pressure of the low-pressure vessel falls abruptly, the regulating valve 33 is opened to compensate for the pressure reduction, by steam injection from the pipe 35, and valve 34 reduces the discharges of vapor through pipe 36, thereby compensating the pressure reduction in the low-pressure vessel 25, thus preventing the solidification of the caustic soda solution.

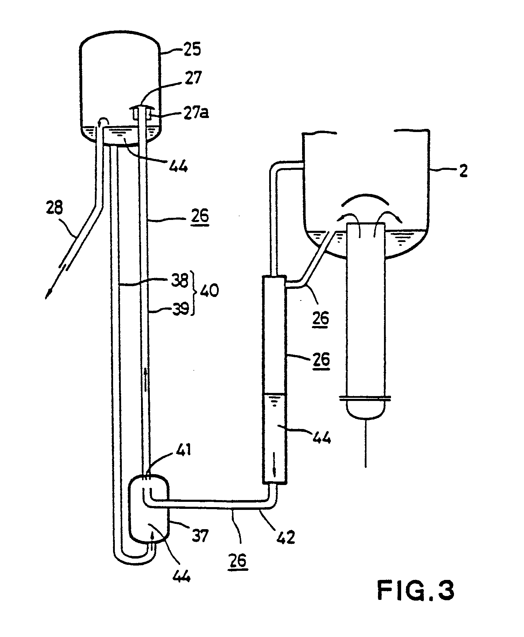

Fig. 3 shows the U-shaped seal siphon tube 26 which constitutes an essential part of another embodiment of the invention. Other parts are materially identical to those shown in Fig. 2.

Referring to Fig. 3, a reference numeral 2 designates the evaporator constituting the high-pressure vessel upstream from the flash, 25 denotes the low-pressure vessel downstream from the flash, 26 denotes the U-shaped seal siphon tube, 27 denotes the deflector attached to one end of the seal siphon tube 26 through supports 27a within the low-pressure vessel 25, and 28 denotes a pipe through which high density caustic soda is discharged from the low-pressure vessel 25.

An intermediate seal pot 37 is disposed in the lower region of the vertical extension of the seal siphon tube 26 adjacent to the low-pressure vessel 25. The upper end of this intermediate seal pot 37 is connected to the lower end of the low-pressure vessel 25 through a rise-pipe 39, and the deflector 27 is attached to the rise-pipe 39. The lower end of the rise-pipe 39 is opened in the top of the intermediate seal pot 37. At the same time, the end of a pipe 42, leading from the evaporator 2 constituting the high-pressure vessel of the seal siphon tube 26, is positioned to face the opening 41 of the rise-pipe 39 at a distance from the opening 41, thus having the effect of a nozzle.

The lower end of the intermediate seal pot 37 and the region of the low-pressure vessel 25 different from the region where the rise-pipe 39 is secured are connected to each other through a fall-pipe 38. The fall-pipe 38 and the rise-pipe 39 in combination constitute a hairpin shaped seal 40.

In this seal siphon structure, the space 44 between the fall-pipe 38 and the rise-pipe 39 is always filled with caustic soda solution, so that the pressure head corresponding to the pressure difference between the evaporator 2 and the low-pressure vessel 25, is applied to the intermediate seal pot through the fall-pipe 38, whereby the pressure in the intermediate seal pot 37 is maintained at the level equal to that before the expansion, e.g., 2.22 bar. The rise-pipe 39 is designed to cause a pressure drop equal to the pressure drop of expansion. In the event that the pressure drop varies because of a varying load, the internal injector constituted by the opening 41 and the end of the pipe 42 within the intermediate seal pot 3 functions to allow the rise-pipe 39 to suck a corresponding amount of caustic soda supplied by natural circulation through the fall-pipe 38, so that the pressure difference is automatically controlled. Consequently, the venting of the vapor from the evaporator 2 serving as a high-pressure vessel is prevented, thereby ensuring stable evaporation.

It will be understood that any change in the pressure within the evaporator 2 as the high-pressure vessel causes a change in the liquid surface of the caustic soda solution 44 in the pipe 42.

If the hairpin seal structure 40 in the U-shaped seal siphon pipe 26 and the intermediate seal pot equipped with the internal injector are omitted, the pressure drop may or may not be balanced by the region of the seal siphon tube 26 in the low-pressure vessel 25, when the pressure difference is changed. Assume that boiling occurs at 1/3 of the height of the seal siphon tube in the low-pressure vessel 25 or near the lower end of the pipe, thus allowing the caustic soda solution to jump. However, by providing hairpin sealing structure 40 and the intermediate seal pot 37 having the internal injector as in Fig. 3, boiling can be confined to the rise-pipe 39, because the internal injector in the intermediate seal pot 37 is maintained at a pressure of 2.22 bar, due to the head.

To recapitulate, with this invention, an alkaline solution which has been concentrated by pressure and heat is further concentrated by being subjected to flash evaporation which is conducted under a reduced pressure. It is thus possible to easily prepare a high-density alkaline solution by using the heat source efficiently.

Also, since the pressure difference between the high-pressure vessel and the low-pressure vessel is balanced because of the U-shaped seal siphon tube, high pressure to low pressure flash evaporation can be effected reliably and safely.

It is noted that reliable operation can be achieved despite a pressure variation at the high or at the low pressure end of the system or a change in the pressure difference by self-balancing the pressure difference by providing the U-shaped seal siphon tube with an intermediate seal pot having a hairpin sealing structure and an internal injector. Additionally, steam may be injected into the low-pressure zone.

Although the invention has been described in specific terms, the invention is not limited to the described embodiments. The invention may be modified without departing from the scope of the invention which is limited solely by the appended claims.

**Claims**

1. A method for preparing a high-concentration alkali by concentrating an alkali solution by evaporation at an elevated temperature, characterized in that the alkali solution is concentrated by evaporation at a high pressure above the atmospheric pressure, and the concentrated solution is expanded to a low pressure by a gradual expansion through a pressure difference absorbing means absorbing the pressure difference between the high pressure at the concentration stage and the low pressure after expansion.

2. A method according to claim 1, characterized in, that the pressure difference is absorbed by a liquid column disposed between the high-pressure concentration stage and the low-pressure stage, the height of said column is chosen so that its liquid pressure is corresponding to said pressure difference.

3. A method according to claim 1 or 2, characterized in, that the low pressure to which the concentrated solution is expanded is chosen below the atmospheric pressure.

4. A method according to one of claims 1—3, characterized in, that a part of the expanded and cooled solution is recirculated and mixed with the concentrated solution after having left the evaporation stage.

5. An apparatus for using the method for preparing a high-density alkali according to one of claims 1—4, characterized by a high-pressure evaporation vessel (2) operated at elevated temperature and under a pressure above atmospheric pressure, and a low-pressure expansion vessel (25) operated under a pressure not exceeding atmospheric pressure, wherein said high-pressure vessel (2) and said low-pressure vessel (25) are connected to each other by a pressure difference absorbing means (26) absorbing the pressure difference between the high-pressure vessel and the low-pressure vessel gradually over its length.

6. An apparatus according to claim 5, characterized in, that said pressure difference absorbing means (26) is a liquid column the vertical extension of which is such, that the hydrostatic pressure in said column corresponds to said pressure difference between the high-pressure vessel (2) and the low-pressure vessel (25).

7. An apparatus according to claim 6, characterized in, that the liquid column (26) is a part of a U-shaped seal siphon tube connected between the high-pressure vessel (2) and the low-pressure vessel (25).

8. An apparatus according to claim 7, characterized in, that an intermediate seal pot (37) is disposed in the lower region of said liquid column (26), the upper end of this intermediate seal pot being connected to the lower end of the low-pressure vessel (25) through a rise-pipe (39) and the lower end of said intermediate seal-pot (37) being connected to said low-pressure vessel (25) by a recirculation pipe (38).

9. An apparatus according to claim 8, characterized in, that the intermediate seal-pot (37) comprises an internal injector constituted by the opening (41) of the lower end of the rise-pipe (39) into the seal-pot and by the end of a pipe (42) connecting the intermediate seal-pot (37) with the high-pressure vessel (2) which is disposed opposite to the opening of the rise-pipe.

10. An apparatus according to one of claims 5—9, characterized in, that the low-pressure vessel (25) has an internal pressure below the atmospheric pressure.

11. An apparatus according to claim 10, characterized in, that a seal tank (29) is disposed between the low-pressure vessel (25) having a pressure below the atmospheric pressure and a cooled flaker (6) for for producing a flake-like high-concentration alkali.

12. An apparatus according to one of claims 5—11, characterized in that pipes (35, 36) are connected to the upper end of the low-pressure vessel (25) comprising regulating valves (33, 34) for regulating the flow-rate of make-up steam or the discharge flow-rate of vapor, respectively.

**Patentansprüche**

1. Verfahren zur Herstellung von hochkonzentriertem Alkali durch Konzentration einer Alkalilösung durch Verdampfung bei erhöhter Temperatur, dadurch gekennzeichnet, dass die Alkalilösung durch Verdampfung bei hohem Druck oberhalb des Atmosphärendruckes konzentriert wird und die konzentrierte Lösung zu einem niedrigen Druck durch allmähliche Expansion über ein druckdifferenzabsorbierendes Mittel, welches die Druckdifferenz zwischen dem hohen Druck in der Konzentrationsstufe und dem niedrigen Druck nach der Expansion absorbiert, expandiert wird.

2. Verfahren nach Anspruch 1, dadurch gekennzeichnet, dass die Druckdifferenz durch eine Flüssigkeitssäule absorbiert wird, welche zwischen der Hochdruck-Konzentrationsstufe und der Niederdruckstufe angeordnet ist, wobei die Höhe der besagten Säule so ausgewählt wird, dass ihr Flüssigkeitsdruck der besagten Druckdifferenz entspricht.

3. Verfahren nach Anspruch 1 oder 2, dadurch gekennzeichnet, dass der niedrige Druck, zu welchem die konzentrierte Lösung expandiert wird, unterhalb des Atmosphärendruckes gewählt wird.

4. Verfahren nach einem der Ansprüche 1—3, dadurch gekennzeichnet, dass ein Teil der expandierten und gekühlten Lösung rezirkuliert und mit der konzentrierten Lösung nach Verlassen der Verdampfungsstufe gemischt wird.

5. Vorrichtung zur Verwendung des Verfahrens zur Herstellung von hochdichtem Alkali nach einem der Ansprüche 1—4, gekennzeichnet durch ein Hochdruck-Verdampfungsgefäss (2), welches bei erhöhter Temperatur und einem Druck oberhalb des Atmosphärendruckes betrieben wird, und ein Niederdruck-Expansionsgefäss (25) welches unter einem Druck betrieben wird, der den Atmosphärendruck nicht übersteigt, wobei das besagte Hochdruckgefäss (2) und das besagte Niederdruckgefäss (25) miteinander durch ein druckdifferenzabsorbierendes Mittel (26) verbunden sind, welches die Druckdifferenz zwischen dem Hochdruckgefäss und dem Niederdruckgefäss allmählich über seine Länge absorbiert.

6. Vorrichtung nach Anspruch 5, dadurch gekennzeichnet, dass das besagte druckdifferenzabsorbierende Mittel (26) eine Flüssigkeitssäule ist, deren vertikale Ausdehnung derart ist, dass der hydrostatische Druck in der besagten Säule der Druckdifferenz zwischen dem Hochdruckgefäss (2) und dem Niederdruckgefäss (25) entspricht.

7. Vorrichtung nach Anspruch 6, dadurch gekennzeichnet, dass die Flüssigkeitssäule (26) ein Teil eines U-förmigen Siphonverschlussrohres ist, welches zwischen dem Hochdruckgefäss (2) und dem Niederdruckgefäss (25) angeschlossen ist.

8. Vorrichtung nach Anspruch 7, dadurch gekennzeichnet, dass ein Zwischenverschlussgefäss (37) in der unteren Region der besagten Flüssigkeitssäule (26) vorgesehen ist, wobei das obere Ende dieses Zwischenverschlussgefässes mit dem unteren Ende des Niederdruckgefässes (25) durch ein Steigrohr (39) und das untere Ende des besagten Zwischenverschlussgefässes (37) mit dem besagten Niederdruckgefäss (25) durch eine Rezirkulationsleitung (38) verbunden ist.

9. Vorrichtung nach Anspruch 8, dadurch gekennzeichnet, dass das Zwischenverschlussgefäss (37) einen inneren Injektor aufweist, der durch die Oeffnung (41) des unteren Endes des Steigrohres (39) in das Verschlussgefäss und durch das Ende einer das Zwischenverschlussgefäss (37) mit dem Hochdruckgefäss (2) verbindenden Leitung (42), welche entgegengesetzt zur Oeffnung des Steigrohrer vorgesehen ist, gebildet ist.

10. Vorrichtung nach einem der Ansprüche 5—9, dadurch gekennzeichnet, dass das Niederdruckgefäss (25) einen Innendruck unterhalb des Atmosphärendruckes hat.

11. Vorrichtung nach Anspruch 10, dadurch gekennzeichnet, dass ein Verschlusstank (29) zwischen dem Niederdruckgefäss (25) mit einem Druck unterhalb des Atmosphärendruckes und einem gekühlten Flocker (6) zur Erzeugung flokkenförmigen hochkonzentrierten Alkalies angeordnet ist.

12. Vorrichtung nach einem der Ansprüche 5—11, dadurch gekennzeichnet, dass an das obere Ende des Niederdruckgefässes (25) Leitungen (35, 36) angeschlossen sind, die Regulierventile (33, 34) zur Regelung des Durchflusses von zugeführtem Wasserdampf bzw. des Durchflusses von abgelassenem Dampf aufweisen.

**Revendications**

1. Procédé de préparation d'alcali à haute concentration par concentration d'une solution d'alcali par évaporation à haute température, caractérisé en ce que la solution d'alcali est concentrée par évaporation à une haute pression supérieure à la pression atmosphérique, et en ceque la solution concentrée est détendue jusqu'à une basse pression par détente progressive dans un moyen absorbant la différence de pression en absorbant la différence de pression entre la haute pression à l'étage de concentration et la basse pression après détente.

2. Procédé selon la revendication 1, caractérisé en ce que la différence de pression est absorbée par une colonne liquide disposée entre l'étage de concentration à haute pression et l'étage à basse pression, la hauteur de ladite colonne étant choisie de telle sorte que sa pression liquide corresponde à ladite différence de pression.

3. Procédé selon la revendication 1 ou 2, caractérisé en ce que la basse pression à laquelle la solution concentrée est détendue est choisie inférieure à la pression atmosphérique.

4. Procédé selon l'une des revendications 1—3, caractérisé en ce qu'une partie de la solution détendue et refroidie est recyclée et mélangée à la solution concentrée après avoir quitté l'étage d'évaporation.

5. Appareil pour utiliser le procédé de préparation d'un alcali à haute densité selon une des revendications 1—4, caractérisé par un récipient d'évaporation à haute pression (2) fonctionnant à haute température et sous une pression supérieure à la pression atmosphérique, et un récipient de détente à basse pression (25) fonctionnant à une pression qui ne dépasse pas la pression atmosphérique, dans lequel ledit récipient à haute pression (2) et ledit récipient à basse pression (25) sont reliés l'un à l'autre par un moyen absorbant la différence de pression (26) qui absorbe progressivement sur sa longueur la différence de pression entre le récipient à haute pression et le récipient à basse pression.

6. Appareil selon la revendication 5, caractérisé en ce que ledit moyen (26) absorbant la différence de pression est une colonne liquide dont l'étendue verticale est telle que la pression hydrostatique dans ladite colonne corresponde à ladite différence de pression entre le récipient à haute pression (2) et le récipient à basse pression (25).

7. Appareil selon la revendication 6, caractérisé en ce que la colonne (26) fait partie d'un tube en siphon en forme de U constituant une garde hydraulique, relié entre le récipient à haute pression (2) et le récipient à basse pression (25).

8. Appareil selon la revendication 7, caractérisé en ce qu' un pot de garde hydraulique intermédiaire (37) est disposé dans la région inférieure de ladite colonne liquide (26), l'extrémité supérieure de ce pot de garde hydraulique intermédiaire étant reliée à l'extrémité inférieure du récipient à basse pression (25) par une conduite ascendante (39) et l'extrémité inférieure dudit pot de garde hydraulique intermédiaire (37) étant reliée audit récipient à basse pression (25) par une conduite de recirculation (38).

9. Appareil selon la revendication 8, caractérisé en ce que le pot de garde hydraulique intermédiaire (37) comprend un injecteur interne constitué par l'ouverture (41) de l'extrémité inférieure de la conduite ascendante (39) dans le pot intermédiaire (37) et par l'extrémité d'une conduite (42) reliant le pot de garde intermédiaire (37) au récipient à haute pression (2) qui est disposée en face de l'ouverture de la conduite ascendante.

10. Appareil selon une des revendications 5—9, caractérisé en ce que le récipient à basse pression (25) a une pression interne inférieure à la pression atmosphérique.

11. Appareil selon la revendication 10, caractérisé en ce qu'un réservoir de garde hydraulique (29) est disposé entre le récipient à basse pression (25) ayant une pression inférieure à la pression atmosphérique et un producteur de paillettes (6) refroidi pour produire un alcali à haute concentration ayant l'aspect de paillettes.

12. Appareil selon une des revendications 5—11, caractérisé en ce que des conduites (35, 36) sont reliées à l'extrémité supérieure du récipient à basse pression (25), comprenant des vannes de réglage (33, 34) pour régler le débit de vapeur d'appoint ou le débit d'échappement de vapeur, respectivement.

FIG.1

FIG.2

0 219 493

FIG.3